Europäisches Patentamt

European Patent Office     (11) Publication number: **0 041 383**

Office européen des brevets     **A2**

(19)

(12)     # EUROPEAN PATENT APPLICATION

(21) Application number: **81302399.1**     (51) Int. Cl.³: **B 23 P 1/08**

(22) Date of filing: **01.06.81**

(30) Priority: **03.06.80 JP 77229/80 U**

(43) Date of publication of application:
**09.12.81 Bulletin 81/49**

(84) Designated Contracting States:
**AT BE CH DE FR GB IT LI LU NL SE**

(71) Applicant: **FUJITSU FANUC LIMITED**
**5-1, Asahigaoka, 3-chome**
**Hino-shi, Tokyo 191(JP)**

(72) Inventor: **Yoshiyuki, Nomura**
**3-27, Tamadaira Hino-shi**
**Tokyo Hino-shataku 103, 191(JP)**

(72) Inventor: **Kanemasa, Okuda**
**3-27, Tamadaira Hino-shi**
**Tokyo Hino-ryo, 191(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) A wire-cut electric discharge machine.

(57) A wire-cut, electric discharge machine comprises two pairs of rollers (21,22) for gripping therebetween a wire with constant pressure provided in the vicinity of each of upper and lower guides (5, 7) of a wire travelling system. When the wire (1) is broken, the pairs of rollers (21,22) hold the wire (1) to prevent it from coming off the travelling system.

FIG. 2A

EP 0 041 383 A2

# A WIRE-CUT ELECTRIC DISCHARGE MACHINE

The present invention relates to a wire-cut, electric discharge machine.

A wire-cut, electric discharge machine performs machining of a work into a desired shape by producing a discharge between a wire installed on its running system and the work. The wire may sometimes be broken during cutting unless the tension of the wire and feed rate and cutting conditions are appropriate. In this case, since the wire is given by a tension brake constant tension, the wire is likely to instantly come off its running system when the wire is broken. If this phenomenon extends to the vicinity of a wire supply reel, then reinstallation of the wire on the running system is very troublesome and impairs the working efficiency.

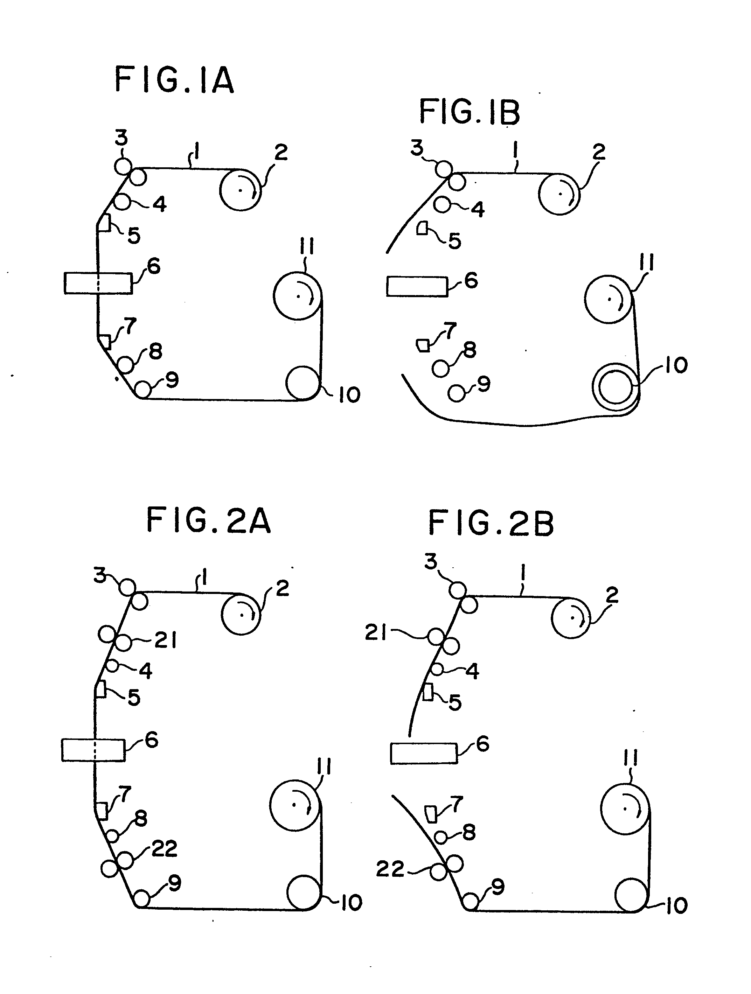

Figs. 1A and 1B schematically show the breakage of the wire in a conventional wire-cut, electric discharge machine. In Figs. 1A and 1B, reference numeral 1 indicates a wire; 2 designates a wire take-up reel; 3 identifies wire feed rollers; 4 and 8 denote feed pins; 5 represents an upper guide; 6 shows a work; 7 refers to a lower guide; 9 indicates a guide roller; 10 designates a tension brake; and 11 identifies a wire supply reel.

During cutting, the wire 1 is installed on the running system, as shown in Fig. 1A, and subjected to fixed tension by the tension brake 10, as mentioned previously. Accordingly, when the wire 1 is broken, it comes off the running system, as depicted in Fig. 1B, and much time is required to reinstall the wire 1 on the running system, as described previously.

To avoid such a defect, it is general practice in the prior art to provide felt pads (not shown) for gripping therebetween the wire 1 in the neighborhood of each of the upper and lower guides 5 and 7 for stretching the wire 1 perpendicularly to the reference plane of the work 6, thereby to prevent the wire 1 from getting out of the running system when it is broken. With this method however, it is difficult to adjust the pressure of the pads so that the tension of the travelling wire 1 may be uniform over the entire range of the running system; this also leads to the drawback that the wire 1 is apt to be broken.

According to the present invention there is provided a wire-cut, electric discharge machine operable to perform machining of a work into a desired shape by producing a discharge between the work and a wire installed on a wire running system of the machine when the machine is in use, the wire running system comprising respective guide means which are located so as to be provided at respective opposite sides of a work when the machine is in use, and the wire running system further comprising a roller pair, for gripping the wire when the machine is in use, provided in the vicinity of one of said respective guide means of the wire running system.

An embodiment of the present invention may provide a wire-cut, electric discharge machine which is designed to prevent the wire from getting out of the running system when the wire is broken.

An embodiment of the present invention may provide a wire-cut, electric discharge machine which is adapted to allow ease in re-installation of the wire in the case of breakage of the wire.

An embodiment of the present invention may provide a wire-cut, electric discharge machine which is arranged so that the tension of the wire may be uniform over the entire range of the wire running system.

For a better understanding of the present invention and to show how it may be put into practice, reference will now be made by way of example to the accompanying drawings in which:

Figs. 1A and 1B are explanatory of a prior art example;

Figs. 2A and 2B are explanatory of an embodiment of the present invention; and

Fig. 3 schematically illustrates the construction of a roller pair for use in an embodiment of the present invention.

Figs. 1A and 1B have already been described.

Figs. 2A and 2B schematically illustrate an embodiment of the present invention, which differs from the prior art example of Figs. 1A and 1B in that the wire 1 is gripped between each of roller pairs 21 and 22 which are pressed together by springs or the like. The roller pairs 21 and 22 can be seen to be in the vicinity of the guides 5 and 7 respectively. In Figs. 2A and 2B, the parts corresponding to those in Figs. 1A and 1B are identified by the same reference numerals.

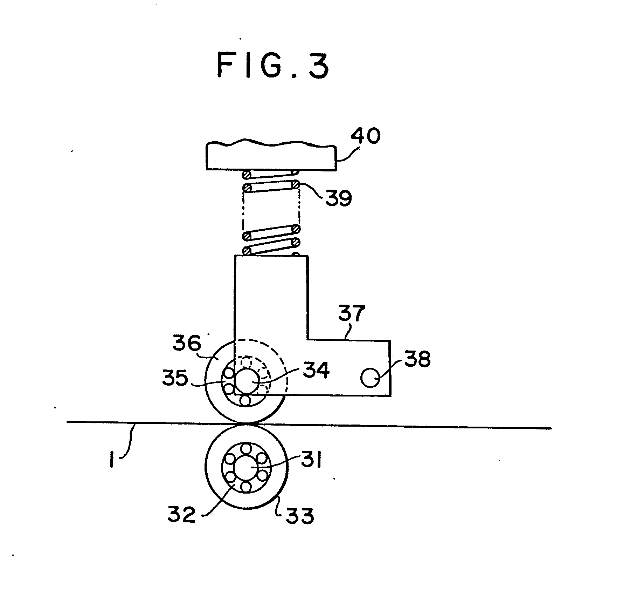

The roller pairs 21 and 22 each have such a contruction as, for example, shown in Fig.3, which comprises: a fixed roller composed of a shaft 31, a ball bearing 32 and a roller member 33; a pressure roller composed of a shaft 34, a ball bearing 35 and a roller member 36; a movable member 37 movable about a shaft 38; and a spring 39 fixed at one end to a stationary part 40 and pressing the movable member 37. The wire 1 is gripped between the roller members 33 and 36 as illustrated.

Accordingly, even if the wire 1 is broken, it is retained by the roller pairs 21 and 22, preventing the wire-coming-off phenomenon from extending to the neighborhood of the wire supply reel 11. Furthermore, since the wire 1 is gripped by the roller pairs 21 and 22 pressed by spring force, the tension of the travelling wire 1 can be held uniform over the entire range of the wire running system.

As has been described above, roller pairs for gripping the wire with a constant pressure are provided in the wire travelling system, so that it is possible to prevent the wire from coming off the travelling system when it is broken and to make the tension of the wire uniform over the entire range of the running system. Accordingly, the present embodiment exhibits the advantages that reinstallation of the wire is easy and that the wire is less likely to be broken than in the prior art employing the felt pads.

It is to be noted that advantages may be achieved even if only one of the roller pairs is provided, particularly if this roller pair is the pair 22 on the supply side of the work 6.

It will be apparent that many modifications and variations may be effected without departing from the scope of the novel concepts of this invention as defined by the following claims.

Claims:

1. A wire-cut, electric discharge machine operable to perform machining of a work into a desired shape by producing a discharge between the work and a wire installed on a running system of the machine when the machine is in use, the wire running system comprising respective guide means which are located so as to be provided at respective opposite sides of a work when the machine is in use, and the wire running system further comprising a roller pair, for gripping the wire when the machine is in use, provided in the vicinity of one of said respective guide means of the wire running system.

2. A wire-cut electric discharge machine according to claim 1, which is designed to operate such that in use it is in such an orientation that said opposite sides of the work are its upper and lower sides.

3. A wire-cut, electric discharge machine according to claim 1 or 2, wherein said roller pair is provided at the wire feed side of said work.

4. A wire-cut, electric discharge machine according to claims 2 and 3 combined, wherein said wire feed side of said work is its lower side.

5. A wire-cut, electric discharge machine according to any preceding claim, and comprising a further roller pair, for gripping the wire when the machine is in use, provided in the vicinity of the other of said respective guide means of the wire running system.

6.      A wire-cut, electric discharge machine according to any preceding claim, wherein the or each roller pair is such as to grip the wire with substantially constant pressure.

7.      A wire-cut, electric discharge machine according to any preceding claim, wherein the or each roller pair comprises a fixed roller and a pressure roller which is urged towards the fixed roller by means of a spring.

FIG.IA

FIG.IB

FIG.2A

FIG.2B

# FIG.3